# EUROPEAN PATENT SPECIFICATION

(11) **EP 1 594 726 B1**
(45) Date of publication and mention of the grant of the patent: **07.01.2009**
(21) Application number: 03704646.3
(22) Date of filing: 18.02.2003
(51) Int. Cl.: B60R 16/02, B60N 2/02

(54) **VEHICLE CONTROL SYSTEM**
FAHRZEUGSTEUER SYSTEM
SYSTEME DE COMMANDE DE VEHICULE

(43) Date of publication of application: 16.11.2005
(73) Proprietor: Harman Becker Automotive Systems GmbH, 76307 Karlsbad (DE)
(72) Inventor: BRÜLLE-DREWS, Christian, 22159 Hamburg (DE)
(74) Representative: Bertsch, Florian Oliver
(86) International application number: PCT/EP2003/001627
(87) International publication number: WO 2004/074047

(56) References cited:
- WO-A-01/87664
- US-A1- 2002 022 453
- US-A1- 2002 096 572

## Description

### Field of the invention

The present invention relates to control systems for vehicles, in particular cars.

### Background to the invention

Modern cars, in particular luxury cars, have a large number of on-board systems the settings of which are programmable by the user, i.e. the driver or passenger. For example, the driver's seat often has multiple controls which allow the user to set the seat's horizontal position, height, inclination, degree of lumbar support, temperature, etc. As another example, the audio system of a car has numerous settings which the user may adjust, such as the volume, balance, equalisation profile, selection of radio stations, traffic information settings, etc. A further example is the air conditioning system of the car.

The driver of a car can invest a lot of effort into adjusting the car's systems to provide the optimum driving experience. Unfortunately, the particular set of adjustments is personal to the driver and this means that when the car is driven by others, the driver's preferred adjustments can be lost. This can be of significant annoyance to a driver who must continually re-adjust the car's systems to the preferred settings. Furthermore, if the driver does not adjust the car's settings before driving off, he can be tempted to make adjustments while driving, which may reduce his level of concentration below a safe level.

The on-board systems of many modern cars are controlled electronically by a central on-board computer which distributes data to the car's components via a vehicle data bus. It is known for a record of the preferred vehicle settings for a particular user to be stored in the on-board computer, so that the user can recall these settings before driving. When the settings are recalled, the vehicle's on-board systems are automatically adjusted to the required values. One method of recalling the settings is for the car to have several uniquely identifiable keys, each of which belongs to a distinct user. When the key is inserted in the car's ignition, it is identified and the car's systems are adjusted to the appropriate settings for the corresponding user. Another method is for the user to enter a personal identification number (PIN) on a keypad.

Such a system may operate satisfactorily where the car has a small number of regular users, for example in the case of the same car being used by several members of a family. However, in the case of hire cars or company fleet cars, where the same user may never drive the same car twice, such a solution is impractical. The present invention seeks to provide an improved solution to this problem which can be applied to large fleets of cars.

The document US 2002/0096572 discloses the preamble of independent claims 1 and 5.

### Summary of the invention

The invention, according to claims 1 and 5, provides an electronic controller for the on-board systems of a vehicle which is configured to communicate user data with an external data storage device, such as a portable digital assistant (PDA), a mobile phone, a external server from and to which information can be communicated for example by a cellular phone connection. The user data corresponds to a value of a user-programmable setting of a component of the vehicle, for example the position of the driver's seat.

For example, using the invention, when the user gets into a car, he sets the position of the driving seat. Before the user leaves the car, the position of the seat is communicated to the user's PDA by the controller, where it is stored. Subsequently, when the user returns to the car, or another car equipped according to the invention, the stored seat position is communicated by the PDA to the controller and the seat position is automatically set to the position required by the user.

In this way, every car that the user drives and which is equipped with the invention can be automatically set to the user's preferred configuration by reading data from the user's PDA. For drivers who regularly use a large number of different cars, for example hire cars or cars from a company car pool, this can be a great advantage in reducing the amount of time and effort spent adjusting the on-board systems of the car. Furthermore, driving safety is enhanced because the user is not distracted from driving by a badly adjusted seat, for example, and tempted to adjust the seat position while driving.

Thus, the invention provides an electronic controller for the on-board systems of a vehicle, such as a car. The vehicle has at least one component, such as a seat or audio system, with at least one user-programmable setting, for example the seat position or default radio station. The controller includes a data processing device, such as an on-board computer. The controller may also include an internal data communication device, such as an interface to a vehicle bus system, for communicating data corresponding to a value of the user-programmable setting with the component.

The controller further includes an external data communication device, such as an infra-red or BLUETOOTH interface for communicating with a portable data storage device, such as a portable digital assistant (PDA) or mobile phone. The external data communication device may further be a device for a long range radio connection such as cellular phone for connecting the data processing device with an external data storage device. The data processing device is configured to send user data via the external data communication device to the portable data storage device. The user data includes information corresponding to a current value of the user-programmable setting, for example the current seat position.

The data processing device is also configured to receive user data via the external data communication device from the portable data storage device. The received user data includes information corresponding to a required value of the user-programmable setting, for example the driver's usual seat position. The data processing device is further configured to communicate data corresponding to the received required value of the user-programmable setting to the relevant component of the vehicle via the internal data communication device.

The data storage device may be portable. A portable data storage device could be any suitable device. For example, the portable data storage device could be smart card or similar memory media. Thus, the external data communication device may be a smart card reader or a reader for other memory media.

Advantageously, however, the portable data storage device is a personal digital assistant (PDA), a laptop computer or a mobile phone. A PDA (or electronic organiser) is a personal computer device of the type sold under the trade marks PALM, PSION and HANDSPRING, for example. Commonly, such devices are used to retain at least calendar information and directory information (names, addresses, telephone numbers, etc.). Many mobile phones include at least some of the functionality of a PDA and, indeed, some PDAs are able to operate as mobile phones. The advantage of the portable data storage device being a PDA, a laptop computer or a mobile phone is that a user is not required to purchase a dedicated device and is likely to keep a PDA or mobile phone with them substantially all of the time. It is therefore unnecessary for the user to remember to carry a dedicated portable data storage device for storing his preferred vehicle settings.

It is desirable for the user data to be communicated between the controller and the portable data storage device in a standard data format. In this way, the portable data storage device can receive the user data without requiring prior knowledge of the specification of a dedicated data format. This reduces the configuration required for a data storage device to operate with a controller according to the invention.

A convenient data format is one which is defined for the exchange of directory information, for example names, addresses and telephone numbers. One such data format is the vCard format defined in "vCard The Electronic Business Card Version 2.1", a versit Consortium Specification, 18 September 1996. The advantage of the use of such a format is that it is widely accepted by portable data storage devices such as PDAs, laptop computers and mobile phones, which are themselves advantageous for use with the invention, as explained above.

Desirably, the user data includes information which is independent of the permanent configuration of the vehicle. In this way, user data received by a portable data storage device from the controller of a first vehicle can be sent to the controller of a second vehicle, and used by that controller to configure the on-board systems of the second vehicle in the same way as that of the first vehicle, even though the two vehicles may have different permanent configurations. For example, the user data may include a value for the horizontal position of the driver's seat in terms of a distance from the clutch pedal to the base of the back rest. For any model of car, this distance can be converted by the controller to a control value for the horizontal position of the driver's seat in order to achieve the required distance. Consequently, when the user moves from one model of car to another, from the user's point of view, the position of the seat should be the same.

The external data communication device may comprise an interface for connection to the portable data storage device. The interface may require a physical connection between the external communication device and the portable data storage device. Preferably, however, the external communication device is a wireless communication device, such as an infra-red interface or a short-range radio interface (e.g. a BLUETOOTH interface). Such interfaces are widely accepted by portable data storage devices such as PDAs and mobile phones.

In general, the invention is of greatest application to cars, but may be applied to other motor vehicles including, but not limited to, vans, trucks, buses, and the like.

The components of the vehicle which may be controlled in accordance with the invention include, but are not limited to, the seats, audio system, heating and/or air conditioning, mirrors and navigation system.

The invention can be considered to provide a method of operating an electronic controller for the on-board systems of a vehicle having at least one component with at least one user-programmable setting, wherein the controller sends user data to a portable data storage device an the user data includes information corresponding to a current value of the user-programmable setting.

The invention can also be considered to provide a method of operating an electronic controller for the on-board systems of a vehicle having at least one component with at least one user-programmable setting, wherein the controller receives user data from a portable data storage device, the user data including information corresponding to a required value of the user-programmable setting, and the controller communicates data corresponding to the received required value of said user-programmable setting to the relevant component of the vehicle.

The invention extends to computer software which configures an electronic controller for the on-board systems of a vehicle to operate in accordance with the method described above and to a computer-readable medium comprising such software.

### Brief description of the drawings

An embodiment of the invention will now be described, by way of example only and with reference to the accompanying drawings, in which:
Figure 1 is a schematic representation of a vehicle embodying the invention;
Figure 2 is a schematic representation of the components of a control system embodying the invention;
Figure 3 is a flow diagram illustrating transmission of data in accordance with an embodiment of the invention; and
Figure 4 is a flow diagram illustrating reception of data in accordance with an embodiment of the invention.

In the drawings, like reference numerals have been used for corresponding components.

### Detailed description of an embodiment

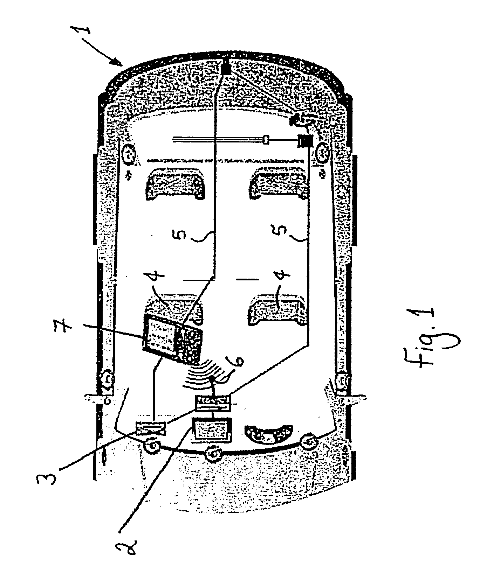

Figure 1 shows schematically a vehicle in the form of a car 1 including an on-board computer 2 which operates as a controller in accordance with the present invention. The car 1 comprises an audio system 3 and front seats 4, all of which are automatically adjustable under the control of the on-board computer 2. The car 1 may comprise other adjustable components with user-programmable settings, but for the sake of simplicity, these are not shown in Figure 1.

The on-board computer 2 communicates with the audio system 3, the seats 4 and other programmable components via a vehicle data bus 5, which carries data indicating the required settings for each component.

The on-board computer 2 is equipped with an infra-red or BLUETOOTH interface 6 for sending and receiving data to and from a user's personal digital assistant (PDA) 7, which is equipped with a corresponding interface.

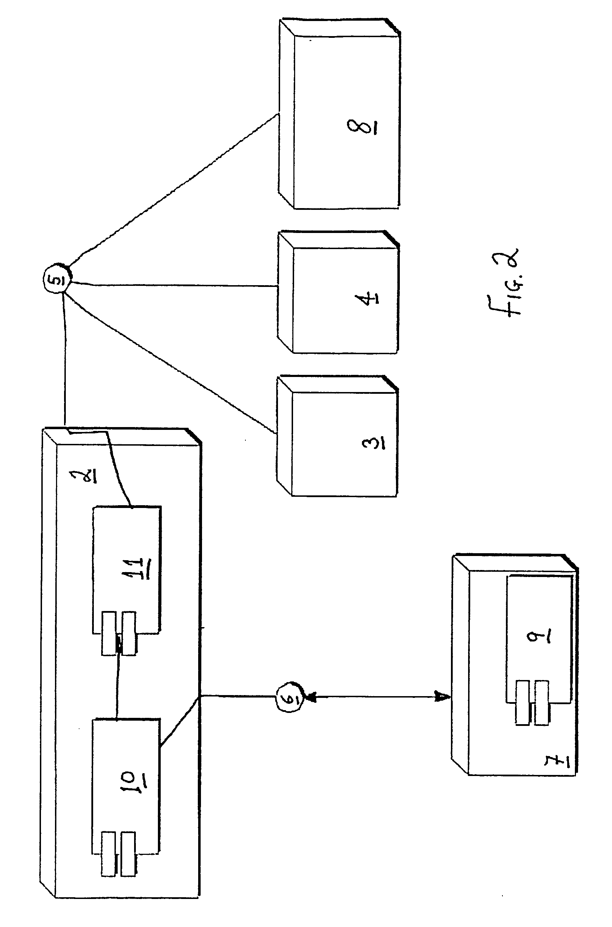

Figure 2 is a schematic representation of the functional units of the control system of the car. As shown in Figure 2, the on-board computer 2 is in data communication with the audio system 3 and the seats 4 via the data bus 5. Further programmable components are represented by an additional functional unit 8 which is also in data communication with the on-board computer 2 via the data bus 5.

The on-board computer 2 is also able to communicate with the user's PDA 7 via an infra-red or BLUETOOTH interface 6. The PDA 7 is compatible with the vCard standard for the transfer of directory information, such as the name, address and telephone number of a person. Thus, the PDA 7 includes software 9 which is capable of receiving, storing, retrieving and sending data in the vCard format.

The vCard data format is used for the exchange of address data by numerous PC, PDA and mobile phone applications and in the Internet. The vCard standard is defined in "vCard The Electronic Business Card Version 2.1", a versit Consortium Specification, 18 September 1996, and includes the optional parameter type "Profile" with the key /x which is intended for the storage of application dependent or experimental information. According to the invention, personal settings for the car, such as seat position, steering wheel position, gear configuration and audio settings, are assembled in the on-board computer and transferred to a laptop computer, PDA or mobile phone via a wireless interface using the vCard format. The transferred data can be retrieved subsequently from the laptop computer, PDA or mobile phone to the on-board computer of the same car or of a different car. When the user changes cars, he can reproduce his driving position as well as other settings both quickly and easily.

The on-board computer 2 includes interpreter software 10 which is capable of sending and receiving data in the vCard format. According to the invention, data corresponding to the current settings of the car's systems is sent to the user's PDA in the vCard format.

The personal settings are stored as an extension in the vCard format. An extension field may be used for each user-definable setting. An example of data in the vCard format including an extension for the x and y position of the driver's seat is set out below with explanatory comments.

| | |
|---|---|
| BEGIN: VCARD | *Begin data set* |
| VERSION: 2.1 | *vCard version* |
| X-SEAT; X=2299;Y=3994 | *vCard extension for x and y* |
| | *position of seat* |
| BEGIN: VCARD | *Begin subset* |
| N: Audi A6 settings | *Indicator in place of a name* |
| END: VCARD | *End subset* |
| END: VCARD | *End data set* |

When the above vCard data is received by the PDA it will appear as an entry in the PDA address book with the name "Audi A6 settings".

The on-board computer 2 also includes converter software 11, which converts the settings of the car's components 3, 4, 8 to data which is independent of the particular make and model of the car 1. The model-independent data is communicated to the PDA 7 in vCard format. Model-independent data received from the PDA 7 via the wireless interface 6 is decoded from the vCard format by the interpreter software 10 and converted to settings for the components 3, 4, 8 of the car 1 by the converter software 11. The converted settings are communicated to the relevant components 3, 4, 8 via the data bus 5.

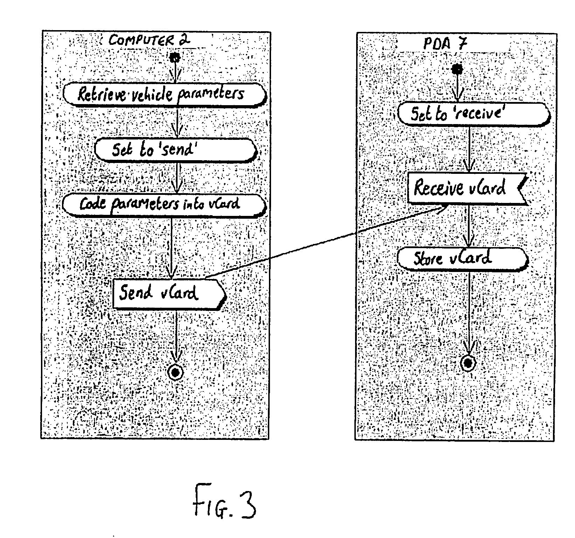

The process for transferring user settings from the on-board computer 2 of the car 1 to the PDA 7 is set out schematically in Figure 3. Initially, the computer 2 retrieves the values of the user-definable parameters of the vehicle 1. This may be done simply by retrieving the values from memory or by polling the relevant components of the vehicle 1, depending on the configuration of the computer 2. The wireless interface 6 is then set to send mode and the retrieved parameters are encoded into the vCard format, for example as set out above. In the meantime, the PDA 7 is set to receive mode. The vCard data is sent from the computer 2 to the PDA 7 via the wireless interface 6. The received vCard data is stored by the PDA 7.

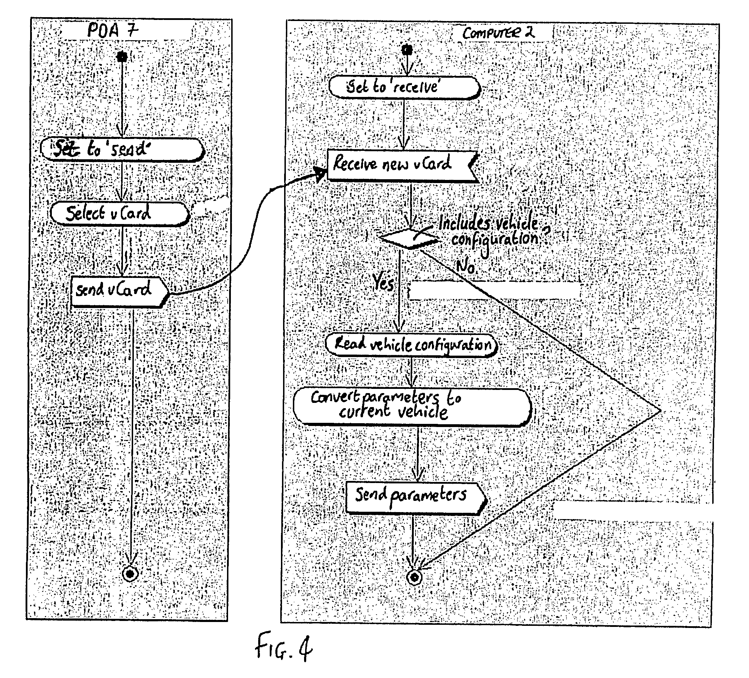

The process for retrieving user settings from the PDA 7 to the on-board computer 2 of the car 1 is set out schematically in Figure 4. The PDA 7 is set to send mode and the vCard data corresponding to the required set of stored vehicle parameters is selected from the vCard address directory of the PDA 7 by the user. In the example set out above, the user would select the item "Audi A6 settings". In the meantime, the wireless interface 6 is made ready to receive address book data. The vCard data is sent from the PDA 7 to the computer 2 via the wireless interface 6. The interpreter software 10 of the computer 2 parses the received vCard data for extension fields which correspond to vehicle configuration data. If no such fields are found, the process ends. If the received vCard data includes vehicle configuration data, the interpreter software 10 reads the vehicle configuration data to the converter software 11. The converter software 11 converts the vehicle configuration data to control parameters for the car 1. The on-board computer 2 requests confirmation from the user that the received settings should replace the current vehicle settings. When confirmation is received, the control parameters are sent via the data bus 5 to the relevant components of the car, for example the driver's seat 4.

In summary, an electronic controller for the on-board systems of a vehicle is configured to communicate user data with an external portable data storage device, such as a portable digital assistant (PDA) or mobile phone via a wireless link. The user data corresponds to the user's personal settings for the vehicle, for example the position of the driver's seat. The user data can be retrieved from the portable data storage device and transferred to the electronic controller of a second vehicle in order to configure the second vehicle to the user's personal settings. The user data is transferred using the vCard data format for personal data interchange. The controller uses existing technology and formats to allow a user easily to transfer their personal vehicle settings from one vehicle to another.

Although the invention has been described with reference to a particular exemplary embodiment, it will be apparent to those skilled in the art that various changes and modifications can be made according the appended claims.

## Claims

1. An electronic controller for the on-board systems of a vehicle having at least one component with at least one user-programmable setting, the controller comprising
a data processing device (2),
an internal data communication device (5) for communication data corresponding to a value of the user-programmable setting with the component (3, 4, 8), and
a wireless interface (6) for communicating with a portable data storage device (7), wherein the data processing device is configured to send user data via the wireless interface to the portable data storage device (7), the user data including information corresponding to a current value of said user-programmable setting,
the data processing device (2) is configured to receive user data via the wireless interface (6) from the portable data storage device (7), the user data including information corresponding to a required value of said user-programmable setting, and
the data processing device (2) is configured to communicate data corresponding to the received required value of said user-programmable setting to the relevant component (3, 4, 8) of the vehicle via the internal data communication device (5), **characterized in that** the data processing device (2) retrieves the value of the user programmable setting of the vehicle and transmits it via the wireless interface to the portable data storage device (7).

2. An electronic controller as claimed in claim 1, wherein the portable data storage device is a device selected from the group consisting of a laptop computer, a personal digital assistant (PDA) and a mobile phone.

3. An electronic controller as claimed in any preceding claim, wherein the user data is in a standard format for the exchange of directory information.

4. An electronic controller as claimed in claim 3, wherein the user data is in the vCard format.

5. A method of operating an electronic controller for the on-board system (2) of a vehicle having at least one component (3, 4, 8) with at least one user-programmable setting,
wherein the controller sends user data via a wireless link (6) to a portable data storage device (7), the user data including information corresponding to a current value of said user-programmable setting,
wherein the controller receives user data from the portable data storage device (7), the user data including information corresponding to a required value of said user-programmable setting, and
the controller communicates data corresponding to the received required value of said user-programmable setting to the relevant component of the vehicle,
**characterized in that** the current value of said user-programmable setting is retrieved of said vehicle and transmitted to the portable data storage device via the wireless interface.

6. A method as claimed in claim 5, wherein the portable data storage device is a device selected from the group consisting of a laptop computer, a personal digital assistant (PDA) and a mobile phone.

7. A method as claimed in any of claims 5 or 6, wherein the user data is in a standard format for the exchange of directory information.

8. A method as claimed in claim 7, wherein the user data is in the vCard format.

9. Computer software which configures an electronic controller for the on-board systems of a vehicle to operate in accordance with the method of any of claims 5 to 8.

10. A computer-readable medium comprising the computer software of claim 9.

## Patentansprüche

1. Elektronische Steuereinheit für die fahrzeugeigenen Systeme eines Fahrzeugs, die mindestens eine Komponente mit mindestens einer benutzerprogrammierbaren Einstellung aufweisen, wobei die Steuereinheit umfasst
eine Datenverarbeitungsvorrichtung (2),
eine interne Datenkommunikationsvorrichtung (5) zum Kommunizieren von Daten, die einem Wert der benutzerprogrammierbaren Einstellung entsprechen, mit der Komponente (3, 4, 8), und
eine drahtlose Schnittstelle (6) zum Kommunizieren mit einer tragbaren Datenspeichervorrichtung (7), wobei die Datenverarbeitungsvorrichtung ausgestaltet ist, um Benutzerdaten mittels der drahtlosen Schnittstelle zu der tragbaren Datenspeichervorrichtung (7) zu senden, wobei die Benutzerdaten Informationen, die einem aktuellen Wert der benutzerprogrammierbaren Einstellung entsprechen, beinhalten,
wobei die Datenverarbeitungsvorrichtung (2) ausgestaltet ist, um Benutzerdaten mittels der drahtlosen Schnittstelle (6) von der tragbaren Datenspeichervorrichtung (7) zu empfangen, wobei die Benutzerdaten Informationen, die einem erforderlichen Wert der benutzerprogrammierbaren Einstellung entsprechen, beinhalten, und
wobei die Datenverarbeitungsvorrichtung (2) ausgestaltet ist, um Daten, die dem empfangenen erforderlichen Wert der benutzerprogrammierbaren Einstellung entsprechen, mittels der internen Datenkommunikationsvorrichtung (5) zu der relevanten Komponente (3, 4, 8) des Fahrzeugs zu kommunizieren, **dadurch gekennzeichnet, dass** die Datenverarbeitungsvorrichtung (2) den Wert der benutzerprogrammierbaren Einstellung des Fahrzeugs erfasst und ihn mittels der drahtlosen Schnittstelle zu der tragbaren Datenspeichervorrichtung (7) übermittelt.

2. Elektronische Steuereinheit nach Anspruch 1, wobei die tragbare Datenspeichervorrichtung eine Vorrichtung ist, die aus der Gruppe ausgewählt ist, die einen Laptop-Computer, einen persönlichen digitalen Assistenten (PDA) und ein Mobiltelefon umfasst.

3. Elektronische Steuereinheit nach einem der vorstehenden Ansprüche, wobei die Benutzerdaten ein Standardformat für den Austausch von Verzeichnisinformationen haben.

4. Elektronische Steuereinheit nach Anspruch 3, wobei die Benutzerdaten das vCard-Format haben.

5. Verfahren zum Betreiben einer elektronischen Steuereinheit für das fahrzeugeigene System (2) eines Fahrzeugs, das mindestens eine Komponente (3, 4, 8) mit mindestens einer benutzerprogrammierbaren Einstellung aufweist,
wobei die Steuereinheit Benutzerdaten mittels einer drahtlosen Verbindung (6) zu einer tragbaren Datenspeichervorrichtung (7) sendet, wobei die Benutzerdaten Informationen, die einem aktuellen Wert der benutzerprogrammierbaren Einstellung entsprechen, beinhalten,
wobei die Steuereinrichtung Benutzerdaten von der tragbaren Datenspeichervorrichtung (7) empfängt, wobei die Benutzerdaten Informationen, die einem erforderlichen Wert der benutzerprogrammierbaren Einstellung entsprechen, beinhalten, und
wobei die Steuereinheit Daten, die dem empfangenen erforderlichen Wert der benutzerprogrammierbaren Einstellung entsprechen, zu den relevanten Komponenten des Fahrzeugs kommuniziert,
**dadurch gekennzeichnet, dass** der aktuelle Wert der benutzerprogrammierbaren Einstellung von dem Fahrzeug erfasst wird und zu der tragbaren Datenspeichervorrichtung mittels der drahtlosen Schnittstelle übermittelt wird.

6. Verfahren nach Anspruch 5, wobei die tragbare Datenspeichervorrichtung eine Vorrichtung ist, die aus der Gruppe ausgewählt ist, die einen Laptop-Computer, einen persönlichen digitalen Assistenten (PDA) und ein Mobiltelefon umfasst.

7. Verfahren nach einem der Ansprüche 5 oder 6, wobei die Benutzerdaten ein Standarddatenformat für den Austausch von Verzeichnisinformationen haben.

8. Verfahren nach Anspruch 7, wobei die Benutzerdaten das vCard-Format haben.

9. Computersoftware, welche eine elektronische Steuereinrichtung für die fahrzeugeigenen Systeme eines Fahrzeugs konfiguriert, um gemäß dem Verfahren nach einem der Ansprüche 5 bis 8 zu arbeiten.

10. Computerlesbares Medium, das die Computersoftware nach Anspruch 9 umfasst.

## Revendications

1. Contrôleur électronique pour les systèmes embarqués d'un véhicule ayant au moins un composant avec au moins un réglage programmable par l'utilisateur, le contrôleur comprenant
un dispositif de traitement de données (2),
un dispositif de communication de données interne (5) pour communiquer des données correspondant à une valeur du réglage programmable par l'utilisateur avec le composant (3, 4, 8), et
une interface sans fil (6) pour communiquer avec un dispositif de stockage de données portable (7), dans lequel le dispositif de traitement de données est configuré pour envoyer des données d'utilisateur via l'interface sans fil au dispositif de stockage de données portable (7), les données d'utilisateur incluant des informations correspondant à une valeur actuelle dudit réglage programmable par l'utilisateur,
le dispositif de traitement de données (2) est configuré pour recevoir des données d'utilisateur via l'interface sans fil (6) en provenance du dispositif de stockage de données portable (7), les données d'utilisateur incluant des informations correspondant à une valeur requise dudit réglage programmable par l'utilisateur et
le dispositif de traitement de données (2) est configuré pour communiquer des données correspondant à la valeur requise reçue dudit réglage programmable par l'utilisateur au composant pertinent (3, 4, 8) du véhicule via le dispositif de communication de données interne (5), **caractérisé en ce que** le dispositif de traitement de données (2) récupère la valeur du réglage programmable par l'utilisateur du véhicule et la transmet via l'interface sans fil au dispositif de stockage de données portable (7).

2. Contrôleur électronique selon la revendication 1, dans lequel le dispositif de stockage de données portable est un dispositif choisi dans le groupe comprenant un ordinateur portable, un assistant numérique personnel (PDA) et un téléphone mobile.

3. Contrôleur électronique selon l'une quelconque des revendications précédentes, dans lequel les données d'utilisateur sont sous un format standard pour l'échange d'informations de répertoire.

4. Contrôleur électronique selon la revendication 3, dans lequel les données d'utilisateur sont au format vCard.

5. Procédé d'exploitation d'un contrôleur électronique pour le système embarqué (2) d'un véhicule ayant au moins un composant (3, 4, 8) avec au moins un réglage programmable par l'utilisateur,
dans lequel le contrôleur envoie des données d'utilisateur via une liaison sans fil (6) à un dispositif de stockage de données portable (7), les données d'utilisateur incluant des informations correspondant à une valeur actuelle dudit réglage programmable par l'utilisateur,
dans lequel le contrôleur reçoit des données d'utilisateur du dispositif de stockage de données portable (7), les données d'utilisateur incluant des informations correspondant à une valeur requise dudit réglage programmable par l'utilisateur, et
le contrôleur communique des données correspondant à la valeur requise reçue dudit réglage programmable par l'utilisateur au composant pertinent du véhicule,
**caractérisé en ce que** la valeur actuelle dudit réglage programmable est récupérée dudit véhicule et transmise au dispositif de stockage de données portable via l'interface sans fil.

6. Procédé selon la revendication 5, dans lequel le dispositif de stockage de données portable est un dispositif choisi dans le groupe comprenant un ordinateur portable, un assistant numérique personnel (PDA) et un téléphone mobile.

7. Procédé selon l'une quelconque des revendications 5 ou 6, dans lequel les données d'utilisateur sont sous un format standard pour l'échange d'informations de répertoire.

8. Procédé selon la revendication 7, dans lequel les données d'utilisateur sont au format vCard.

9. Logiciel informatique qui configure un contrôleur électronique pour les systèmes embarqués d'un véhicule pour qu'il fonctionne conformément au procédé de l'une quelconque des revendications 5 à 8.

10. Support lisible par ordinateur comprenant le logiciel informatique de la revendication 9.
